# EUROPEAN PATENT SPECIFICATION

(11) **EP 3 882 421 B1**
(45) Date of publication and mention of the grant of the patent: **06.11.2024**
(21) Application number: 19884877.2
(22) Date of filing: 11.09.2019
(51) Int. Cl.: E05B 83/24, B62D 25/12, E05B 79/10, E05C 3/34

(54) **HOOD LOCKING DEVICE**
HAUBENVERRIEGELUNGSVORRICHTUNG
DISPOSITIF DE VERROUILLAGE DE CAPOT

(30) Priority: 12.11.2018 JP 2018212101
(43) Date of publication of application: 22.09.2021
(73) Proprietor: Toyoda Iron Works Co., Ltd., Toyota-shi, Aichi 471-8507 (JP)
(72) Inventor: MIYAKE, Satoru, Toyota-shi, Aichi 471-8507 (JP); TANIGUCHI, Takeshi, Toyota-shi, Aichi 471-8507 (JP)
(74) Representative: Bals & Vogel Patentanwälte PartGmbB
(86) International application number: PCT/JP2019/035745
(87) International publication number: WO 2020/100397

(56) References cited:
- DE-A1- 10 203 523
- FR-A- 1 045 894
- FR-A1- 2 725 468
- JP-A- 2000 314 256
- JP-A- 2010 229 631
- JP-A- 2016 064 778
- JP-A- 2018 131 817
- JP-Y1- S34 800

## Description

### TECHNICAL FIELD

The present disclosure relates to a hood locking device.

### BACKGROUND ART

Vehicles, such as automobiles, include a hood locking device that fixes and unfixes an engine hood at a closed position. The hood locking device includes a base plate attached to a radiator support at a front end of the vehicle, a locking mechanism that fixes and unfixes the engine hood, and an operation cable used to operate the locking mechanism. The operation cable extends in the width direction of the vehicle.

A locking device for locking two structural parts with two latches is known from the document DE 102 03 523 A1. The document FR 1 045 894 A discloses a hood locking device with two latches which one of the two latches includes one of a projection and a recess and the other one of the two latches includes the other one of the projection and the recess.

Patent Document 1 discloses a locking mechanism that includes a latch and a pawl. The latch and the pawl are pivotally supported by a base plate. When the latch engages with a striker included in the engine hood, the pawl engages with the latch. This restrains the striker and locks the engine hood. As a result, the engine hood is fixed at the closed position. When an operation using the operation cable is performed to pivot the pawl to a detachment position, the pawl disengages from the latch. This permits the striker to rise.

Patent Document 2 discloses a hood locking device included in a pop-up hood device. The hood locking device is supported by a locking base such that the hood locking device can pop up. The hood locking device includes a latch that is rotationally supported by the locking base and an intermediate operation portion configured to keep the latch engaged with the striker. The intermediate operation portion is rotationally supported by the hood locking device.

When latched to a fixing hook rotationally supported by the locking base, the hood locking device is prohibited from popping up. When the fixing hook is unlatched, the hood locking device pops up and moves upwards.

When the hood locking device is prohibited from popping up, the intermediate operation portion is arranged so as to face a vehicle body-side operation portion. The vehicle body-side operation portion is rotationally supported by the locking base.

In the state in which the hood locking device is prohibited from popping up, when the vehicle body-side operation portion is operated using an operation cable, the intermediate operation portion is pivoted by a vehicle body operation portion. This disengages the intermediate operation portion from the latch and permits rising of the striker (and engine hood) that has been latched by the latch.

### PRIOR ART DOCUMENTS

### Patent Documents

Patent Document 1: Japanese Laid-Open Patent Publication No. 2010-229631
Patent Document 2: Japanese Laid-Open Patent Publication No. 2016-64778

### SUMMARY OF THE INVENTION

### Problems that the Invention is to Solve

In Patent Document 1, the distance between the rotary shaft of the latch and the rotary shaft of the pawl (for example, the separation distance in the up-down direction and the width direction of the vehicle) needs to be increased in order to provide a region for rotating the latch and the pawl. This enlarges the hood locking device.

Also, in Patent Document 2, the distance between the rotary shaft of the latch and the rotary shaft of the intermediate operation portion (for example, the separation distance in the up-down direction and the width direction of the vehicle) needs to be increased in order to provide a region for rotating the latch and the intermediate operation portion. This enlarges the hood locking device.

It is an objective of the present disclosure to provide a hood locking device capable of being reduced in size.

### Means for Solving the Problem

A hood locking device according to the invention includes a locking mechanism. The locking mechanism includes two latches. The two latches are configured to fix an engine hood at a closed position by latching a striker included with the engine hood of a vehicle and unfix the engine hood by releasing the striker. One of the two latches includes one of a projection and a recess and the other one of the two latches includes the other one of the projection and the recess. The projection and the recess form a fitting portion and the projection is fitted to the recess. The two latches are pivotally supported by a base plate fixed to the vehicle and configured such that latching directions of the two latches for the striker are opposite to each other. One of the two latches includes a right-hand-drive operation cable attachment portion and the other one of the two latches includes a left-hand-drive operation cable attachment portion.

### BRIEF DESCRIPTION OF THE DRAWINGS

Fig. 1 is a perspective view showing a hood locking device according to a first embodiment from the rear.
Fig. 2 is a perspective view showing part of the hood locking device of Fig. 1 from the front.
Fig. 3 is a perspective view showing the locking mechanism and the cable supporting base that are included in the hood locking device of Fig. 1.
Fig. 4 is a plan view showing the locking mechanism and the cable supporting base of Fig. 3.
Fig. 5 is a front view showing the vehicle equipped with the hood locking device of Fig. 1.
Fig. 6 is a diagram illustrating an operation of the hood locking device shown in Fig. 1.
Fig. 7 is a diagram illustrating an operation of the hood locking device shown in Fig. 1.
Fig. 8 is a diagram illustrating an operation of the hood locking device shown in Fig. 1.
Fig. 9 is a diagram illustrating an operation of the hood locking device shown in Fig. 1.
Fig. 10 is a diagram illustrating an operation of the hood locking device shown in Fig. 1.
Fig. 11 is a perspective view showing part of a hood locking device according to a second embodiment.
Fig. 12 is a perspective view showing an attachment portion of an operation cable according to the second embodiment.
Fig. 13 is a perspective view showing part of the hood locking device according to a modification.

### MODES FOR CARRYING OUT THE INVENTION

### First Embodiment

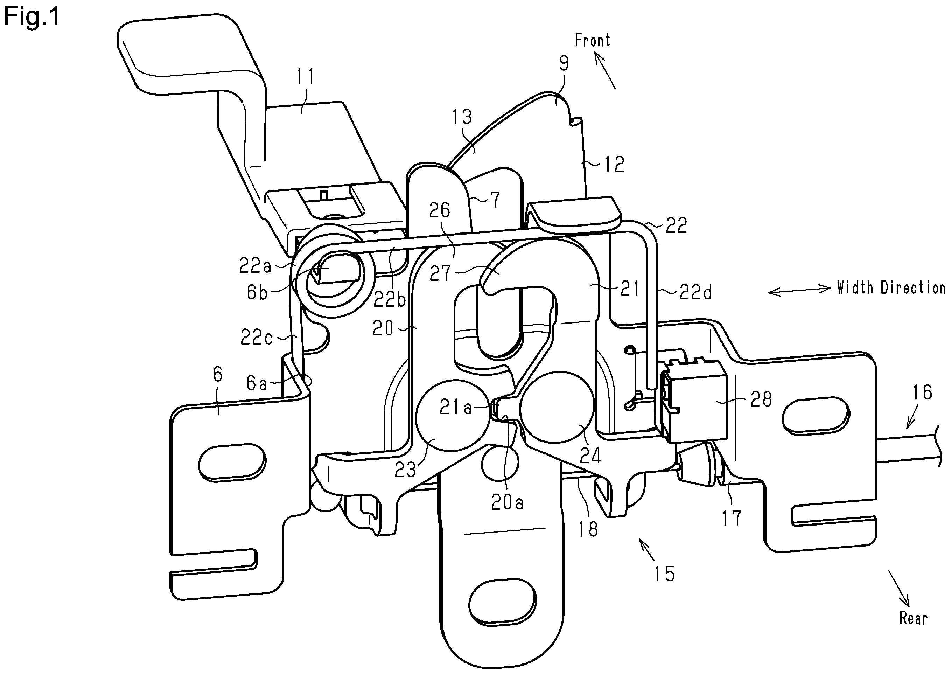

A hood locking device according to a first embodiment will now be described with reference to Figs. 1 to 10.

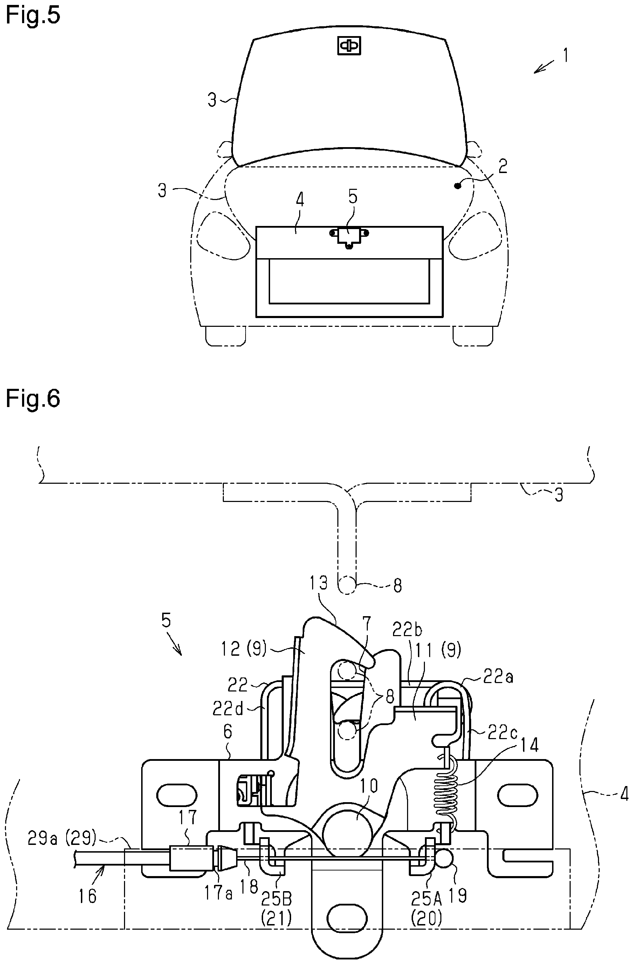

Fig. 5 shows a vehicle 1 that includes an engine compartment 2, an engine hood 3 on the upper side of the engine compartment 2, a radiator support 4, and a hood locking device 5. In the present disclosure, the up, down, right, left, front, and rear correspond to the up, down, right, left, front, and rear of the vehicle, respectively. Further, the width direction of the present disclosure corresponds to the width direction of the vehicle 1. The engine hood 3 is configured to open and close the engine compartment 2 by moving (pivoting) upwards and downwards. The hood locking device 5 is configured to fix the engine hood 3 at a closed position (the long dashed double-short dashed line in Fig. 5) and unfix the engine hood 3.

As shown in Fig. 6, the engine hood 3 is capable of being opened to a fully-open position (a position at which the opening angle is the maximum) when the engine hood 3 is released from a catch 9 (described later) of the hood locking device 5. The radiator support 4 has the shape of a quadrilateral frame. The radiator support 4 is located on the front side of the engine compartment 2 (the front side in the direction that is orthogonal to the sheet of Fig. 5). The upper part of the radiator support 4 is made of a synthetic plastic material. The other part of the radiator support 4 is made of a metal material. The hood locking device 5 is attached to the upper part of the radiator support 4.

Fig. 1 shows the hood locking device 5 as viewed from the rear of the vehicle 1. Fig. 6 shows the hood locking device 5 as viewed from the front of the vehicle 1. The hood locking device 5 includes a base plate 6 that is attached to the upper part of the radiator support 4. The base plate 6 includes a flat portion 6a that extends in the width direction. The flat portion 6a includes a notch 7 that extends downwards from the upper end of the flat portion 6a. The notch 7 is located at the substantially middle part of the flat portion 6a in the width direction. The notch 7 includes an opening that opens upwards and two opposing end surfaces. The distance between the two end surfaces increases toward the opening.

The engine hood 3 (Fig. 6) includes a striker 8 that protrudes downwards from the lower surface of the engine hood 3. The striker 8 is located in correspondence with the notch 7 in the width direction. When the engine hood 3 is moved from the open position to the closed position, the striker 8 moves into the notch 7.

As shown in Fig. 6, the front part of the base plate 6 includes the catch 9 that has a flat shape and is parallel to the base plate 6. The catch 9 permits the striker 8 to move into the notch 7. Further, the catch 9 is configured to hinder the engine hood 3 from become fully open by preventing the removal of the striker 8 from the notch 7. Being fully open means that the engine hood 3 is open at the maximum opening angle.

The catch 9 is supported by the base plate 6 such that the catch 9 is rotatable about a pin 10. The catch 9 includes a lever 11 and an arm 12. The lever 11 is located on one side of the notch 7 in the width direction (left-right direction in Fig. 6). The arm 12 is located on the other side of the notch 7 in the width direction. The arm 12 includes a hook 13 that is bent from the upper end of the arm 12 toward the lever 11 such that the hook 13 has the shape of a hook. The upper end surface of the hook 13 is an inclined surface that becomes lower toward the lever 11.

The catch 9 is held by a biasing force of a spring 14 at a position where the hook 13 closes the opening of the notch 7 in the direction in which the catch 9 rotates about the pin 10. That is, the catch 9 is biased by the spring 14 such that the catch 9 moves onto a movement trajectory of the striker 8. The spring 14 is an example of a biasing member.

Downward movement of the engine hood 3 from the open position toward the closed position causes the striker 8 of the engine hood 3 to abut against the upper end surface of the hook 13. Further, the striker 8 presses the hook 13 against the biasing force of the spring 14 in the direction in which the opening of the notch 7 is opened. Then, the striker 8 moves into the notch 7 from the section between the tip of the hook 13 and the end surface of the notch 7. After the striker 8 moves into the notch 7 in this manner, the hook 13 (catch 9) is returned to the original position by the biasing force of the spring 14.

To open the engine hood 3 at the closed position, the lever 11 of the catch 9 is operated with the engine hood 3 unfixed at the closed position. This operation causes the catch 9 to rotate about the pin 10 so that the hook 13 opens the opening of the notch 7. At this time, the catch 9 rotates against the biasing force of the spring 14. When the opening of the notch 7 is not opened, the hook 13 hinders the striker 8 from being upwardly removed from the inside of the notch 7. When the opening of the notch 7 is opened in the above-described manner (in other words, after the hook 13 is moved to a position that does not overlap the opening of the notch 7) by the rotation of the catch 9 and then the engine hood 3 is lifted, the striker 8 is upwardly removed from the notch 7. This causes the engine hood 3 to open.

When the engine hood 3 is opened and then the operation of the lever 11 of the catch 9 is stopped, the biasing force of the spring 14 causes the catch 9 to rotate about the pin 10 to the position where the opening of the notch 7 is closed by the hook 13.

Referring to Fig. 1, the hood locking device 5 includes a locking mechanism 15 that fixes and unfixes the engine hood 3 of the vehicle at the closed position. The hood locking device 5 further includes an operation cable 16 used to operate the locking mechanism 15. The operation cable 16 extends in the width direction.

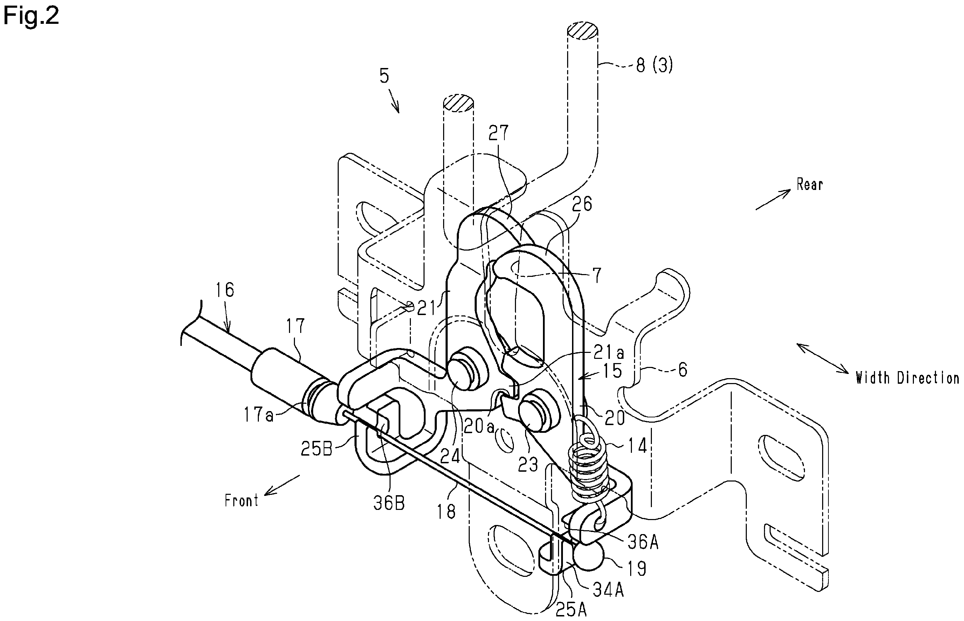

As shown in Fig. 2, the operation cable 16 includes a cable covering 17 and a wire 18 that passes through the cable covering 17. The wire 18 includes a spherical coupling portion 19 at the tip of the portion of the wire 18 protruding from the cable covering 17. The coupling portion 19 connects the wire 18 to the locking mechanism 15. The vehicle of the present embodiment is a right-hand-drive vehicle. The operation cable 16 is used for right-hand drive.

The locking mechanism 15 includes a first latch 20 and a second latch 21 that are arranged in the width direction at the rear of the base plate 6. The first latch 20 and the second latch 21 are plates parallel to the flat portion 6a. The first latch 20 and the second latch 21 are pivotally supported on the opposite sides of the notch 7 in the base plate 6 in the width direction. The substantially middle part of the first latch 20 in the up-down direction includes a pin 23 serving as a pivot shaft. The substantially middle part of the second latch 21 in the up-down direction includes a pin 24 serving as a pivot shaft.

As shown in Figs. 1 and 2, the upper part of the first latch 20 is a curved protrusion 26 that protrudes toward the second latch 21, and the upper part of the second latch 21 is a curved protrusion 27 that protrudes toward the first latch 20. When the curved protrusions 26, 27 overlap each other in the thickness direction (front-rear direction), the striker 8 is hindered from upwardly moving toward the opening of the notch 7. Hereinafter, in a simulated manner, the state in which the upward movement of the striker 8 is hindered is referred to as a state in which the opening of the notch 7 is closed. Further, the state in which the upward movement of the striker 8 is permitted is referred to as a state in which the opening is opened. The curved protrusions 26, 27 are engagement portions that engage with the striker 8 at the position where the curved protrusions 26, 27 close the opening of the notch 7.

The upper end surface of the curved protrusion 26 may have an arcuate shape that becomes lower toward the second latch 21. The upper end surface of the curved protrusion 27 may have an arcuate shape that becomes lower toward the first latch 20. Each of the upper end surfaces of the curved protrusions 26, 27 does not have to be arcuate and may be, for example, a straight inclined surface that becomes lower toward the other adjacent latch.

The first latch 20 includes a recess 20a at the substantially middle portion of the first latch 20 in the up-down direction and between the pin 23 and the second latch 21 in the width direction. The second latch 21 includes a projection 21a that protrudes toward the pin 23. The second latch 21 is located at the substantially middle portion of the second latch 21 in the up-down direction and is located between the pin 24 and the first latch 20 in the width direction. The projection 21a is designed to be fitted to the recess 20a when inserted into the recess 20a. Thus, when the first latch 20 is rotated about the pin 23 so that the projection 21a is fitted to the recess 20a, the second latch 21 is rotated about the pin 24 in the direction opposite to the first latch 20. That is, the first latch 20 and the second latch 21 are rotated such that latching directions for the striker 8 are opposite to each other. The recess 20a and the projection 21a correspond to a fitting portion of the present embodiment.

When the first latch 20 and the second latch 21 rotate in a direction in which the curved protrusions 26, 27 are separated from each other, the opening of the notch 7 is opened. When the first latch 20 and the second latch 21 rotate in a direction in which the curved protrusions 26, 27 approach each other, the curved protrusions 26, 27 overlap each other in the thickness direction. This closes the opening of the notch 7.

As shown in Figs. 1 and 6, a spring 22 is attached to the rear surface of the base plate 6. The spring 22 is bent so as to surround the upper sides of the first latch 20 and the second latch 21 and surround the opposite sides of the first latch 20 and the second latch 21 in the width direction (the right and left sides in Fig. 6). The spring 22 is, for example, a torsion coil spring. The spring 22 includes a wound portion 22a, extensions 22b, 22c that respectively extend from the opposite ends of the wound portion 22a, and an extension 22d that downwardly extends from the tip of the extension 22b. The wound portion 22a is wound on a guide piece 6b that protrudes from the base plate 6. The extension 22b extends in the width direction on the upper sides of the first latch 20 and the second latch 21. The extension 22b passes through the section of the notch 7 between the curved protrusions 26, 27 and the hook 13. The extension 22c is in contact with the flat portion 6a of the base plate 6. The extension 22d is in contact with a switch 28 that is attached to the base plate 6.

As shown in Fig. 2, each of the first latch 20 and the second latch 21 includes a lower part (protrusion) that protrudes frontward from the base plate 6 on the lower side of the base plate 6. The lower part (protrusion) of the first latch 20 includes a first cable attachment portion 25A. The coupling portion 19 of the operation cable 16, which is used for right-hand drive, engages with the first cable attachment portion 25A. The lower part (protrusion) of the second latch 21 includes a second cable attachment portion 25B. The second cable attachment portion 25B is configured to engage with a coupling portion used for left-hand drive. The first cable attachment portion 25A is a right-hand-drive operation cable attachment portion. The second cable attachment portion 25B is a left-hand-drive operation cable attachment portion.

The first and second coupling portions 25A, 25B are provided such that they are arranged in the width direction (such that they are located on a straight line in the width direction). The first and second coupling portions 25A, 25B respectively include groove-shaped slits 36A, 36B. The wires of the operation cables extending in the width direction are respectively insertable into the slits 36A, 36B from the diagonally front upper side.

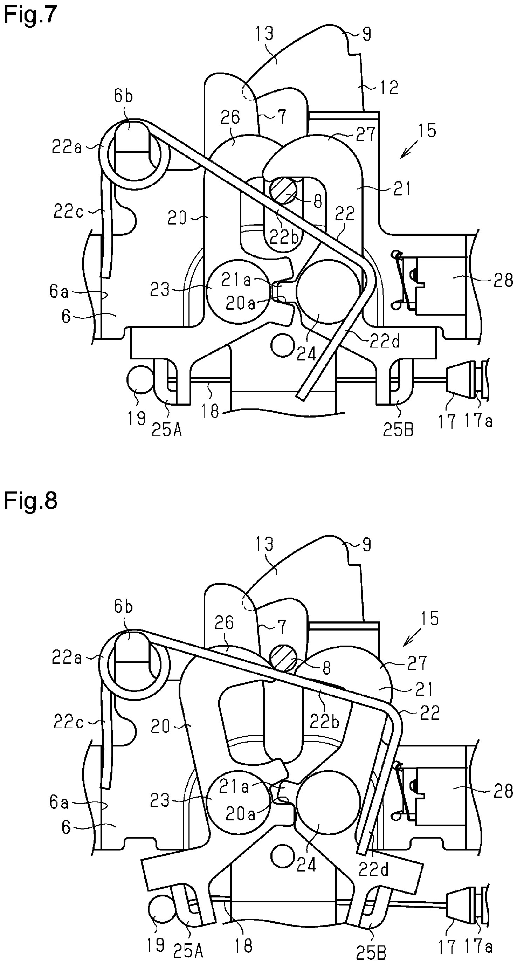

When the coupling portion 19 of the right-hand-drive operation cable 16 is attached to the first cable attachment portion 25A as shown in Fig. 7, the wire 18 is loosely inserted into the slit 36B (refer to Fig. 2). Although not illustrated in the drawings, when the coupling portion of the left-hand-drive operation cable is attached to the second cable attachment portion 25B, the wire 18 is loosely inserted into the slit 36A (refer to Fig. 2).

The lower end of the spring 14 is coupled to the lower part (protrusion) of the first latch 20. The spring 14 biases the first latch 20 in a rotation direction in which the curved protrusion 26 approaches the curved protrusion 27.

As shown in Fig. 6, the upper end of the spring 14 is coupled to a portion of the catch 9 located above the base plate 6. This allows the catch 9 and the first latch 20 to be biased by the same spring 14.

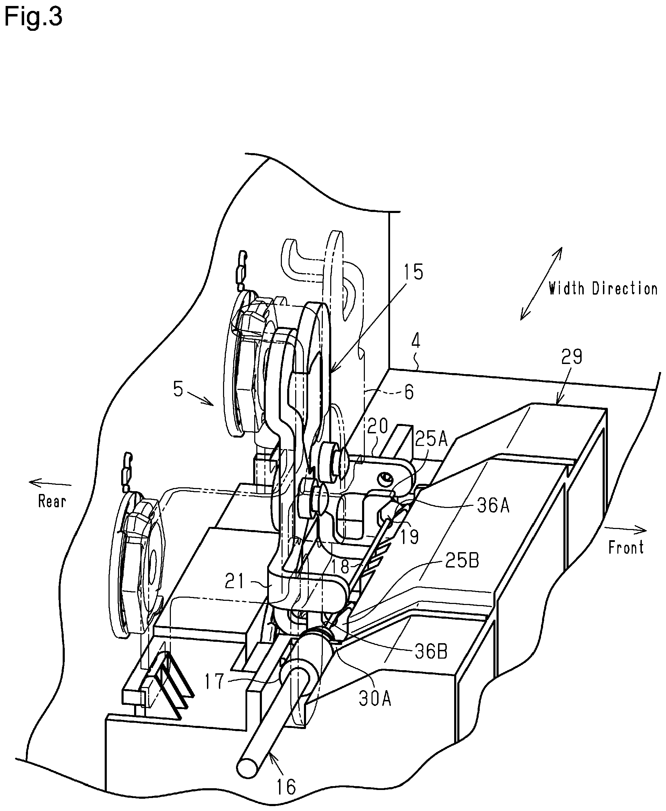

Fig. 3 shows the locking mechanism 15 and a cable supporting base 29 from above. Fig. 3 shows the operation cable 16 attached to the locking mechanism 15 and the surrounding structure of the operation cable 16 in the hood locking device 5.

As shown in Fig. 3, the cable supporting base 29 is arranged at the portion of the radiator support 4 on the front side of the locking mechanism 15. The cable supporting base 29 includes a plate-shaped first covering attachment portion 30A in the vicinity of the lower part of the second latch 21. The first covering attachment portion 30A is arranged at a position corresponding to the first cable attachment portion 25A in the width direction.

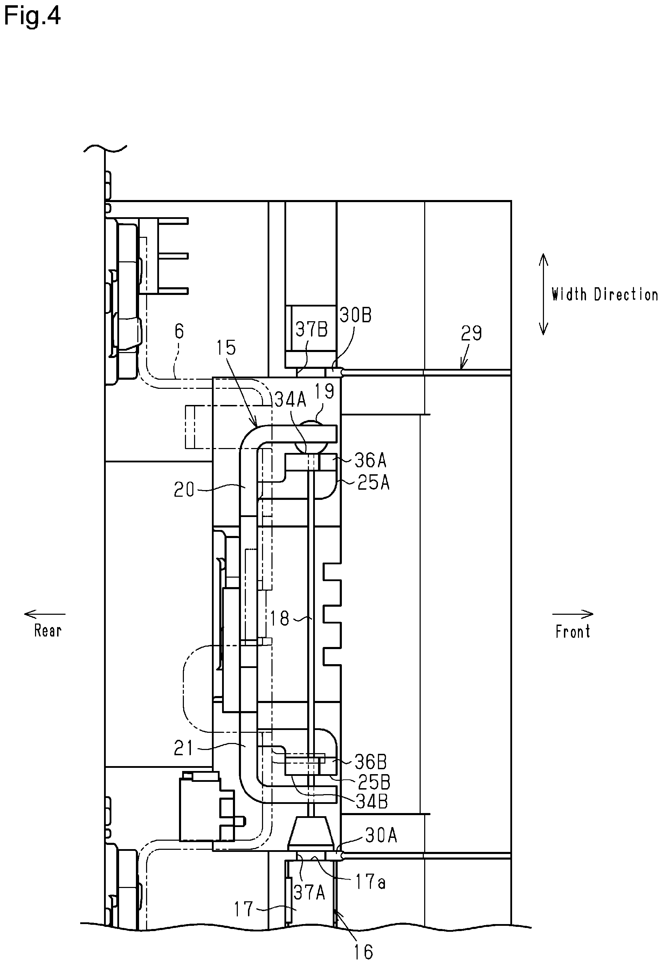

As shown in Fig. 4, the first cable attachment portion 25A includes an abutment surface 34A on the opposite side of the first covering attachment portion 30A. The slit 36A opens in the abutment surface 34A. The coupling portion 19 of the operation cable 16 engages with the first cable attachment portion 25A so as to abut against the abutment surface 34A. The portion of the wire 18 of the operation cable 16 connecting to the coupling portion 19 is loosely inserted into the slit 36A. The slit 36A is inclined so as to become upper toward the front.

As shown in Fig. 3, the tip of the cable covering 17 is engaged with the first covering attachment portion 30A of the cable supporting base 29. The wire 18 protrudes from the tip of the cable covering 17. As shown in Fig. 4, the plate-shaped first covering attachment portion 30A includes a recess 37A that opens upward. The tip of the cable covering 17 is inserted into the recess 37A.

As shown in Fig. 6, the cable covering 17 includes an annular groove 17a that extends in the circumferential direction. The groove 17a is close to the tip of the cable covering 17. As shown in Fig. 4, the groove 17a of the cable covering 17 is fitted to the recess 37A (more specifically, the bottom and the inner side of the recess 37A). In this manner, the cable covering 17 of the operation cable 16 engages with the first covering attachment portion 30A. This causes the cable covering 17 to be positioned such that the cable covering 17 does not move in the extending direction of the operation cable 16.

Since the vehicle 1 of the present embodiment is a right-hand-drive vehicle, the right-hand-drive operation cable 16 is attached to the hood locking device 5. If the vehicle 1 is a left-hand-drive vehicle, the left-hand drive operation cable simply needs to be attached to the hood locking device 5.

As shown in Fig. 4, the cable supporting base 29 includes a plate-shaped second covering attachment portion 30B in the vicinity of the lower part of the first latch 20. The second covering attachment portion 30B is arranged at a position corresponding to the second cable attachment portion 25B in the width direction.

As shown in Fig. 4, the second cable attachment portion 25B includes an abutment surface 34B on the opposite side of the second covering attachment portion 30B. The slit 36B opens in the abutment surface 34B. The coupling portion of the left-hand-drive operation cable engages with the second cable attachment portion 25B so as to abut against the abutment surface 34B.

The portion of the wire of the operation cable connecting to the coupling portion is loosely inserted into the slit 36B. The slit 36B is inclined so as to become upper toward the front.

As shown in Fig. 4, the second covering attachment portion 30B of the cable supporting base 29 is configured to be engaged with a left-hand-drive cable covering. More specifically, the second covering attachment portion 30B includes a recess 37B that opens upward, and the tip of the cable covering is inserted into the recess 37B. The tip of the cable covering is inserted into the recess 37B in the same manner as the right-hand-drive cable covering.

When the groove of the cable covering is fitted to the recess 37B, the cable covering engages with the second covering attachment portion 30B. This allows the cable covering to be positioned such that the cable covering does not move in the extending direction of the operation cable.

The right-hand-drive operation cable 16 extends to the driver's seat of the vehicle 1 and connects to an operation lever on the driver's seat.

### Operation of Embodiment

The operation of the hood locking device 5 in the present embodiment will now be described.

When the operation lever is not operated, that is, when the wire 18 is not pulled, the locking mechanism 15 of the hood locking device 5 is in the state shown in Fig. 2. In this state, the engine hood 3 is downwardly moved from the open position (shown by the long dashed double-short dashed line in Fig. 6) toward the closed position. This causes the striker 8 of the engine hood 3 to push the curved protrusions 26, 27 and push open the first and second latches 20, 21 against the biasing force of the spring 14. Subsequently, the striker 8 moves into a region (locking region) that is located in the notch 7 of the base plate 6 and below the curved protrusions 26, 27. This elastically deforms the wound portion 22a of the spring 22 so that the spring 22 biases the striker 8 upwards. The elastic deformation of the wound portion 22a separates the extension 22d of the spring 22 from the switch 28.

As the striker 8 moves into the notch 7, the second latch 21 is returned to the original position (position shown in Fig. 7) by the biasing force of the spring 14 transmitted through the first latch 20 and the fitting portion. This causes the curved protrusions 26, 27 to overlap each other in the thickness direction and causes the first and second latches 20, 21 to engage with the striker 8. That is, the striker 8 is restricted from being upwardly removed from the locking region, which is in the notch 7 and below the curved protrusions 26, 27. As a result, the engine hood 3 (striker 8) is fixed at the closed position.

Fig. 7 shows the engine hood 3 fixed by the hood locking device 5 at the closed position. To unfix the engine hood 3, the operation lever of the driver's seat is operated to pull the wire 18 of the operation cable 16. This causes the first latch 20 connected to the coupling portion 19 of the wire 18 to be rotated about the pin 23 against the biasing force of the spring 14 (refer to Fig. 2). This rotation is transmitted to the second latch 21 through the fitting portion so that the second latch 21 also rotates about the pin 24 in the direction opposite to the first latch 20 (refer to Fig. 8). The rotation of the first and second latches 20, 21 in the opposite directions unfixes the engine hood 3 at the closed position.

In more detail, the first and second latches 20, 21 rotate against the biasing force of the spring 14 (Fig. 2) such that the curved protrusions 26, 27 overlapping in the thickness direction are separated from each other. The rotation direction in which the first and second latches 20, 21 unlatch the striker 8 is referred to as an unlatching direction. When the engine hood 3 is unfixed, the striker 8 in the locking region, which is in the notch 7 and below the curved protrusions 26, 27, is upwardly moved from the locking region by the biasing force of the spring 22 (refer to Fig. 7).

The upward movement of the striker 8 returns the spring 22 to the original position (shown by the solid line in Fig. 6). This causes the extension 22d of the spring 22 to be in contact with the switch 28. The switch 28 detects whether the engine hood 3 (striker 8) is fixed or unfixed at the closed position depending on whether the spring 22 is in contact with the switch 28.

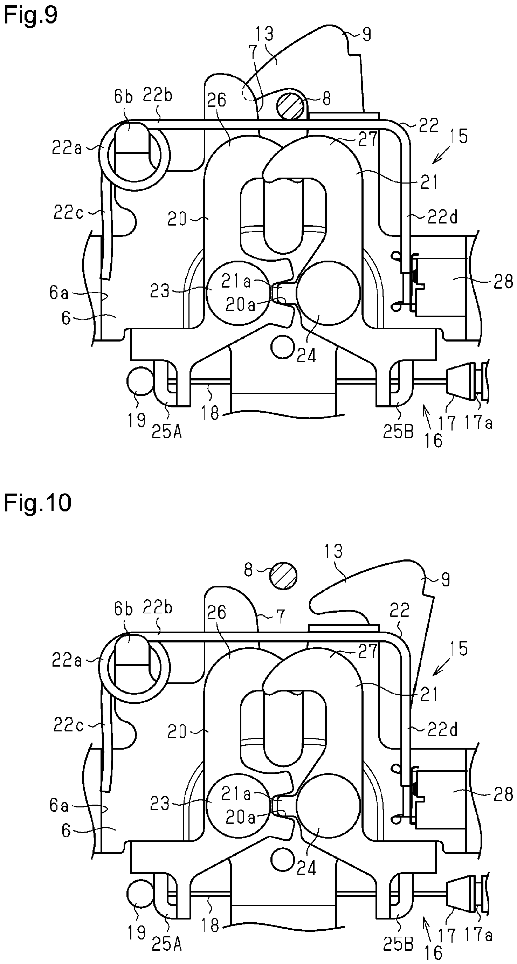

After moving upwards from the locking region, the striker 8 is restricted from further moving by engaging with the hook 13 of the catch 9 as shown in Fig. 9. That is, after the engine hood 3 is unfixed, the striker 8 remains in the notch 7.

Then, when the lever 11 of the catch 9 is operated to rotate the catch 9 about the pin 10, the hook 13 opens the opening of the notch 7. Lifting the engine hood 3 in this state removes the striker 8 upwards from the notch 7. This causes the engine hood 3 to open.

The present embodiment described above in detail has the following advantages.
(1) When the projection 21a is fitted to the recess 20a, the first latch 20 and the second latch 21 engage with each other. Thus, the separation distance decreases between the rotary shaft (pin 23) of the first latch 20 and the rotary shaft (pin 24) of the second latch 21. This reduces the size of the base plate 6 and ultimately reduces the size of the hood locking device.
(2) When the projection 21a is fitted to the recess 20a, the first latch 20 and the second latch 21 move together. Thus, when one of the first and second latches 20, 21 is rotated by an operation cable in a latching direction, the other one is rotated in the opposite latching direction, thereby unlocking the latches. Thus, the right-hand-drive or left-hand-drive operation cable simply needs to be coupled to the latch that is operated in the corresponding latching direction. This eliminates the need for a hood locking device having a different structure. Accordingly, only a common hood locking device needs to be manufactured so that common components are used. This decreases the types of hood locking devices and reduces the costs of components.
   Conventional hood locking devices for right-hand drive and left-hand drive have similar shapes and structures. This causes erroneous coupling of the hood locking device. In the present embodiment, the right-hand-drive or left-hand-drive operation cable simply needs to be coupled to the corresponding latch. This prevents the right-hand-drive and left-hand-drive operation cables from being erroneously coupled to the hood locking device.
(3) In the present embodiment, the attachment position of the right-hand-drive cable covering 17 (the position of the recess 37A) differs from the attachment position of the left-hand-drive cable covering (the position of the recess 37B). Further, the attachment position of the right-hand-drive coupling portion 19 (the position of the first cable attachment portion 25A) differs from the attachment position of the left-hand-drive coupling portion (the position of the second cable attachment portion 25B). This prevents erroneous coupling of the operation cables.
   The length of the wire 18 exposed between the cable covering 17 and the coupling portion 19 differs between when the right-hand-drive coupling portion 19 is erroneously attached to the second cable attachment portion 25B and when the right-hand-drive coupling portion 19 is correctly attached to the first cable attachment portion 25A. The length of the wire 18 exposed between the cable covering 17 and the coupling portion 19 are set such that coupling is performed correctly. This restricts erroneous coupling.
(4) In the present embodiment, to one (first latch 20) of the first and second latches 20, 21, the spring 14 (biasing member) that biases the latch in the latching direction is coupled. This eliminates the need to arrange, for the other latch, a biasing member that biases the latch in the latching direction. This reduces the number of components and reduces the weight of the hood locking device.
(5) In the present embodiment, the spring 14 (biasing member) coupled to the first latch 20 is also coupled to the catch 9. Thus, only one spring needs to be used to bias the first latch 20 and the catch 9 in the latching direction. This reduces the number of components and reduces the weight of the hood locking device.
(6) In the present embodiment, the first and second latches 20, 21 are arranged in the width direction, and the right-hand-drive first cable attachment portion 25A and the left-hand-drive second cable attachment portion 25B are arranged in the width direction. Further, when a coupling portion of an operation cable is attached to one of the cable attachment portions 25A, 25B, the wire exposed to the coupling portion from the cable covering of the operation cable is loosely inserted into the other one of the operation cable attachment portions. If the wire exposed from the cable covering to the coupling portion cannot be loosely inserted into the other one of the operation cable attachment portions, one of the operation cable attachment portions needs to be offset from the other one of the operation cable attachment portions. The present embodiment eliminates the need for the offset and reduces the hood locking device in size accordingly.

### Second Embodiment

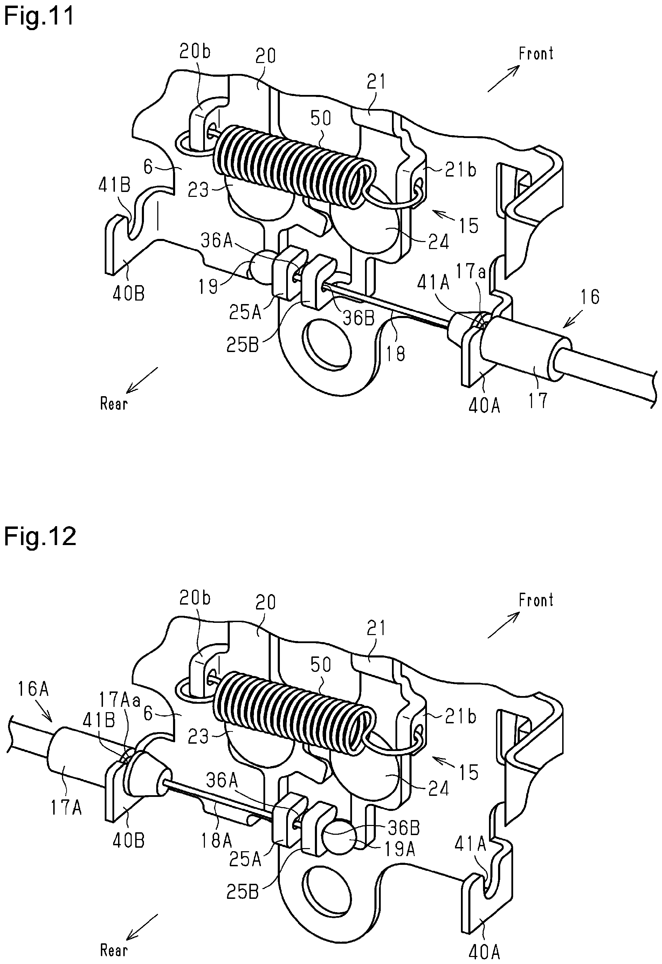

A hood locking device according to a second embodiment will now be described with reference to Figs. 11 and 12. The following description focuses on the difference from the first embodiment. Like or the same reference numerals are given to the corresponding components of the first embodiment. Such components will not be described. In Fig. 11, the switch 28 is omitted for illustrative purposes, but it should be understood that the switch 28 is provided in the same manner as the first embodiment.

The present embodiment differs from the first embodiment in the structure of fixing the cable coverings of the operation cables and the manner of biasing the first and second latches 20, 21 in the latching directions.

As shown in Fig. 12, the first and second coupling portions 25A, 25B protrude rearward from the base plate 6 at the lower parts of the first and second latches 20, 21. The slits 36A, 36B open frontward and extend horizontally. In the present embodiment, the first and second coupling attachment portions 5A, 25B are arranged in the width direction in the same manner.

The fixing structure of the cable covering does not include the first and second covering attachment portions 30A and 30B. Instead, as shown in Fig. 11, in the base plate 6, a first covering attachment portion 40A and a second covering attachment portion 40B are provided on the right side of the first latch 20 and the left side of the second latch 21 (on the left and right sides in Fig. 11), respectively.

The first and second covering attachment portion 40A, 40B protrude rearward from the base plate 6. The first covering attachment portion 40A opposes the second cable attachment portion 25B. The second covering attachment portion 40B opposes the first cable attachment portion 25A. The first cable attachment portion 25A and the second cable attachment portion 25B oppose each other. That is, in Fig. 11, the second covering attachment portion 40B, the first cable attachment portion 25A, the second cable attachment portion 25B, and the first covering attachment portion 40A are arranged in this order in the width direction from left to right. The first and second covering attachment portions 40A, 40B respectively include upwardly-opening recesses 41A, 41B.

As shown in Fig. 11, in the case of a right-hand-drive vehicle, the groove 17a of the right-hand-drive cable covering 17 is fitted to the recess 41A of the first covering attachment portion 40A and the coupling portion 19 is engaged with the first cable attachment portion 25A. Further, when the right-hand-drive coupling portion 19 is attached, the wire 18 is loosely inserted into the slit 36B of the second cable attachment portion 25B.

As shown in Fig. 12, in the case of a left-hand-drive vehicle, the groove 17a of a left-hand-drive cable covering 17A is fitted to the recess 41B of the second covering attachment portion 40B and a coupling portion 19A is engaged with the second cable attachment portion 25B. Further, when the left-hand-drive coupling portion 19A is attached, a wire 18A is loosely inserted into the slit 36A of the first cable attachment portion 25A.

As shown in Fig. 11, the first and second latches 20, 21 include spring latching pieces 20b, 21b, respectively. The spring latching piece 20b protrudes rearward from the side end of the first latch 20 opposite to the second latch 21. The spring latching piece 21b protrudes rearward from the side end of the second latch 21 opposite to the first latch 20. Opposite ends of a coil spring 50, which is a biasing member, are latched to the spring latching pieces 20b, 21b, respectively. The coil spring 50 biases the first and second latches 20, 21 in a latching direction in which the striker 8 that has moved into the notch 7 is latched. Although not illustrated in the drawings, the lower end of the spring 14 is latched to the base plate 6 and the upper end of the spring 14 is latched to a part of the catch 9 located above the base plate 6.

The sixth embodiment has the following advantage in addition to advantages (1) to (3) and (6) of the first embodiment.

(7) The slits 36A, 36B open frontward and extend horizontally. This limits the upward removal of the coupling portions 19, 19A.

### Third Embodiment

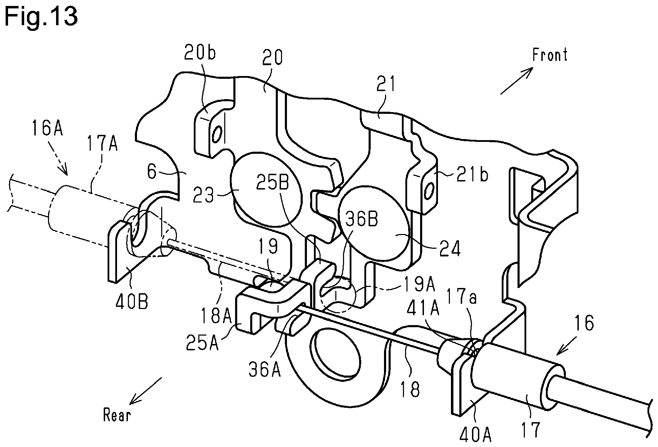

A hood locking device according to a third embodiment will now be described with reference to Fig. 13. The following description focuses on the difference from the second embodiment. Like or the same reference numerals are given to the corresponding components of the second embodiment. Such components will not be described. In Fig. 13, the switch 28 and the coil spring 50 are omitted for illustrative purposes, but it should be understood that the switch 28 and the coil spring 50 are provided in the same manner as the second embodiment.

The first cable attachment portion 25A and the first covering attachment portion 40A are respectively offset in the front-rear direction from the second cable attachment portion 25B and the second covering attachment portion 40B.

The offset is preferably made by the following structure (a) or (b).
(a) When the operation cable 16 and an operation cable 16A are respectively coupled to the cable attachment portions 25A, 25B and the covering attachment portions 40A, 40B in a correct manner, one of the wires 18, 18A is more separated from the flat surface of the base plate 6, which includes the notch 7, than the other one of the wires 18, 18A.
(b) The wires 18, 18A are arranged in parallel to the flat surface of the part (flat portion 6a) of the base plate 6 including the notch 7.

In the present embodiment, as shown in Fig. 13, in the base plate 6, the separation distance to the wire 18 from the flat surface of the part (flat portion 6a) of the base plate 6 including the notch 7 is longer than the separation distance to the wire 18A from that flat surface.

The second embodiment has the following advantage in addition to advantages (1) to (3) and (6) of the first embodiment.

(8) The position for coupling the coupling portion 19 to the cable covering 17 and the position for coupling the coupling portion 19A to the cable covering 17A differ from each other in the width direction (the longitudinal direction for coupling the operation cables). This prevents erroneous coupling of the right-hand-drive operation cable 16 or the left-hand-drive operation cable 16A.

### Modifications

Each of the above-described embodiments may be modified as follows.

In the first embodiment, the cable supporting base 29 includes the first covering attachment portion 30A. Instead, the first covering attachment portion 30A may be attached or fixed to the base plate 6. In this case, the cable covering 17 of the operation cable 16 is coupled to the radiator support 4 by the base plate 6, which is attached to the radiator support 4, and by the first covering attachment portion 30A, which is fixed to the base plate 6.

Likewise, the cable supporting base 29 includes the second covering attachment portion 30B. Instead, the second covering attachment portion 30B may be attached or fixed to the base plate 6. In this case, the cable covering of the operation cable is coupled to the radiator support 4 by the base plate 6, which is attached to the radiator support 4, and by the second covering attachment portion 30B, which is fixed to the base plate 6.

In the first embodiment, the first and second latches 20 respectively include the recess 20a and the projection 21a. Instead, each of the first and second latches 20, 21 may include a projection and a recess.

In the first embodiment, the fitting portion in which the projection is fitted to the recess is not limited to the recess 20a and the projection 21a. Instead, for example, each of the first and second latches 20, 21 may integrally include a gear (including a gear segment) that rotates about the corresponding one of the pins 23, 24 so that these gears function as the fitting portion. The gears rotate the first and second latches 20, 21 preferably at an equal speed. However, the gears are not limited to this configuration.

The biasing member of the first embodiment is not limited to the spring 14. Instead, the biasing member of the first embodiment may be, for example, a spiral spring wound around the pin 23 or the pin 24.

In the first embodiment, one end of the spring 14, which is a biasing member, may be coupled to the base plate 6 instead of the catch 9. In this case, the catch 9 simply needs to include an additional spring that biases the striker 8 in the latching direction. The spring may be, for example, a spiral spring or a coil spring.

In the third embodiment, the first cable attachment portion 25A and the first covering attachment portion 40A are respectively offset in the front-rear direction from the second cable attachment portion 25B and the second covering attachment portion 40B. Instead, the first cable attachment portion 25A and the first covering attachment portion 40A may be respectively offset in the up-down direction from the second cable attachment portion 25B and the second covering attachment portion 40B. Alternatively, the first cable attachment portion 25A and the first covering attachment portion 40A are respectively offset in the front-rear direction and the up-down direction from the second cable attachment portion 25B and the second covering attachment portion 40B.

The third embodiment includes feature (b), in which the wires 18, 18A are arranged in parallel to the flat surface of the part (flat portion 6a) of the base plate 6 including the notch 7. The wires 18, 18A do not necessarily have to be completely parallel to that flat surface. Instead, the wires 18, 18A may be arranged obliquely relative to the flat surface of the flat portion 6a in a range in which the operation cable can be operated.

## Claims

1. A hood locking device (5), comprising a locking mechanism (15), wherein
the locking mechanism (15) includes two latches (20, 21),
the two latches (20, 21) are configured to fix an engine hood (3) at a closed position by latching a striker (8) included with the engine hood (20, 21) of a vehicle (1) and unfix the engine hood (3) by releasing the striker (8),
one of the two latches (20, 21) includes one of a projection (21a) and a recess (20a) and the other one of the two latches (20, 21) includes the other one of the projection (21a) and the recess (20a), wherein the projection (21a) and the recess (20a) form a fitting portion and the projection (21a) is fitted to the recess (20a),
the two latches (20, 21) are pivotally supported by a base plate (6) fixed to the vehicle (1) and configured such that latching directions of the two latches (20, 21) for the striker (8) are opposite to each other,
**characterized in that**
one of the two latches (20, 21) includes a right-hand-drive operation cable attachment portion (25A) and the other one of the two latches (20, 21) includes a left-hand-drive operation cable attachment portion (25B).

2. The hood locking device (5) according to claim 1, further comprising a biasing member (14) coupled to one of the two latches (20, 21), the biasing member (14) biasing the one of the two latches (20, 21) in the latching direction.

3. The hood locking device (5) according to claim 2, wherein
each of the two latches (20, 21) includes an engagement portion (26, 27) configured to engage with the striker (8),
the hood locking device (5) comprises:
a spring (22) attached to the base plate (6), the spring (22) being configured to bias the striker (8) toward the engagement portions (26, 27) of the two latches (20, 21) when the engine hood (3) is located at the closed position and configured to release the striker (8) through the biasing when the two latches (20, 21) are pivoted in the latching directions opposite to each other; and
a catch (9) pivotally supported by the base plate (6), the catch (9) being configured to pivot in a direction in which the striker (8) is permitted to move into a section between the two latches (20, 21) when the engine hood (3) moves toward the closed position and configured to hinder full opening of the engine hood (3) by, when the striker (8) is released from the two latches (20, 21), engaging with the released striker (8), the catch (9) being configured to be moved, by a manual operation, in a direction in which the catch (9) disengages from the striker (8),
the biasing member (14) is coupled to the catch (9) and one of the latches (20,21), and
the biasing member (14) biases the catch (9) such that the catch (9) moves onto a movement trajectory of the striker (8).

4. The hood locking device (5) according to claim 1, further comprising a biasing member (14) coupled to the two latches (20, 21), the biasing member (14) biasing the two latches (20, 21) in the latching directions.

5. The hood locking device (5) according to any one of claims 1 to 3, wherein
the two latches (20, 21) are arranged in a width direction of the vehicle (1),
the right-hand-drive operation cable attachment portion (25A) and the left-hand-drive operation cable attachment portion (25B) are arranged in the width direction of the vehicle (1), and
when a coupling portion (19) of an operation cable (16) is attached to one of the right-hand-drive operation cable attachment portion (25A) and the left-hand-drive operation cable attachment portion (25B), a wire (18) exposed to the coupling portion (19) from a cable covering (17) of the operation cable (16) is loosely inserted into the other one of the operation cable attachment portions (25A, 25B).

6. The hood locking device (5) according to any one of claims 1 to 3, wherein
the two latches (20, 21) are arranged in a width direction of the vehicle (1), and
the right-hand-drive operation cable attachment portion (25A) and the left-hand-drive operation cable attachment portion (25B) are offset from each other in at least one of a front-rear direction or an up-down direction of the vehicle (1).

## Patentansprüche

1. Haubenverriegelungsvorrichtung (5), die einen Verriegelungsmechanismus (15)
umfasst, wobei
der Verriegelungsmechanismus (15) zwei Verriegelungen (20, 21) umfasst,
wobei die beiden Verriegelungen (20, 21) so konfiguriert sind, dass sie eine Motorhaube (3) in einer geschlossenen Position durch Verriegeln eines in der Motorhaube (20, 21) eines Fahrzeugs (1) enthaltenen Schließers (8) fixieren und die Motorhaube (3) durch Lösen des Schließers (8) lösen,
wobei einer der beiden Verriegelungen (20, 21) einen von einem Vorsprung (21a) und einer Aussparung (20a) aufweist und der andere der beiden Verriegelungen (20, 21) den anderen von dem Vorsprung (21a) und der Aussparung (20a) aufweist, wobei der Vorsprung (21a) und die Aussparung (20a) einen Passbereich bilden und der Vorsprung (21a) in die Aussparung (20a) eingepasst ist,
die beiden Verriegelungen (20, 21) schwenkbar an einer am Fahrzeug (1) befestigten Grundplatte (6) gelagert und so gestaltet sind, dass die Einrastrichtungen der beiden Verriegelungen (20, 21) für den Schließer (8) einander entgegengesetzt sind,
**dadurch gekennzeichnet, dass**
eine der beiden Verriegelungen (20, 21) einen Befestigungsabschnitt (25A) für ein Rechtslenker-Betätigungskabel aufweist und die andere der beiden Verriegelungen (20, 21) einen Befestigungsabschnitt (25B) für ein Linkslenker-Betätigungskabel aufweist.

2. Haubenverriegelungsvorrichtung (5) nach Anspruch 1, ferner mit einem Vorspannelement (14), das mit einem der beiden Verriegelungen (20, 21) gekoppelt ist, wobei das Vorspannelement (14) den einen der beiden Verriegelungen (20, 21) in der Verriegelungsrichtung vorspannt.

3. Haubenverriegelungsvorrichtung (5) nach Anspruch 2, wobei
jede der beiden Verriegelungen (20, 21) einen Eingriffsabschnitt (26, 27) aufweist, der so konfiguriert ist, dass er mit dem Schließer (8) in Eingriff kommt,
wobei die Haubenverriegelungsvorrichtung (5) umfasst:
eine Feder (22), die an der Grundplatte (6) befestigt ist, wobei die Feder (22) so konfiguriert ist, dass sie den Schließer (8) in Richtung der Eingriffsabschnitte (26, 27) der beiden Verriegelungen (20, 21) vorspannt, wenn sich die Motorhaube (3) in der geschlossenen Position befindet, und so konfiguriert ist, dass sie den Schließer (8) durch die Vorspannung freigibt, wenn die beiden Verriegelungen (20, 21) in die einander entgegengesetzten Verriegelungsrichtungen geschwenkt werden; und eine Klinke (9),
die schwenkbar von der Grundplatte (6) getragen wird, wobei die Klinke (9) so konfiguriert ist, dass sie in eine Richtung schwenkt, in der sich der Schließer (8) in einen Abschnitt zwischen den beiden Verriegelungen (20, 21) bewegen kann, wenn sich die Motorhaube (3) in die geschlossene Position bewegt, und so konfiguriert ist, dass sie ein vollständiges Öffnen der Motorhaube (3) verhindert, indem sie, wenn der Schließer (8) von den beiden Verriegelungen (20, 21) freigegeben wird, in den freigegebenen Schließer (8) eingreift, wobei die Klinke (9) so konfiguriert ist, dass sie durch eine manuelle Betätigung in eine Richtung bewegt werden kann, in der die Klinke (9) von dem Schließer (8) gelöst wird,
das Vorspannelement (14) mit der Klinke (9) und einer der Verriegelungen (20, 21) gekoppelt ist, und
das Vorspannelement (14) die Klinke (9) so vorspannt, dass sich die Klinke (9) auf eine Bewegungsbahn des Schließers (8) bewegt.

4. Haubenverriegelungsvorrichtung (5) nach Anspruch 1, ferner mit einem Vorspannelement (14), das mit den beiden Verriegelungen (20, 21) gekoppelt ist, wobei das Vorspannelement (14) die beiden Verriegelungen (20, 21) in den Verriegelungsrichtungen vorspannt.

5. Haubenverriegelungsvorrichtung (5) nach einem der Ansprüche 1 bis 3, **dadurch gekennzeichnet, dass**
die beiden Verriegelungen (20, 21) in Breitenrichtung des Fahrzeugs (1) angeordnet sind, der Befestigungsabschnitt (25A) für das Rechtslenker-Bedienungskabel und der Befestigungsabschnitt (25B) für das Linkslenker-Bedienungskabel in der Breitenrichtung des Fahrzeugs (1) angeordnet sind, und
wenn ein Kupplungsabschnitt (19) eines Betriebskabels (16) an einem von dem Befestigungsabschnitt (25A) für das Rechtslenker-Bedienungskabel und dem Befestigungsabschnitt (25B) für das Linkslenker-Bedienungskabel angebracht ist, ein Draht (18), der von einer Kabelhülle (17) des Betriebskabels (16) zu dem Kupplungsabschnitt (19) freiliegt, lose in den anderen der Befestigungsabschnitte (25A, 25B) eingeführt wird.

6. Haubenverriegelungsvorrichtung (5) nach einem der Ansprüche 1 bis 3, **dadurch gekennzeichnet, dass**
die beiden Verriegelungen (20, 21) in Breitenrichtung des Fahrzeugs (1) angeordnet sind, und der Befestigungsabschnitt (25A) für das Rechtslenker-Bedienungskabel und der Befestigungsabschnitt (25B) für das Linkslenker-Bedienungskabel in mindestens einer Richtung von vorne nach hinten oder einer Richtung von oben nach unten des Fahrzeugs (1) gegeneinander versetzt sind.

## Revendications

1. Dispositif de verrouillage de capot (5), comprenant un mécanisme de verrouillage (15), dans lequel
le mécanisme de verrouillage (15) comprend deux loquets (20, 21),
les deux loquets (20, 21) sont configurés pour fixer un capot moteur (3) dans une position fermée en verrouillant une gâche (8) incluse dans le capot moteur (20, 21) d'un véhicule (1) et pour déverrouiller le capot moteur (3) en relâchant la gâche (8),
l'un des deux loquets (20, 21) comprend une saillie (21a) et un renfoncement (20a) et l'autre des deux loquets (20, 21) comprend l'autre saillie (21a) et le renfoncement (20a), la saillie (21a) et le renfoncement (20a) formant une partie d'ajustement et la saillie (21a) étant ajustée au renfoncement (20a),
les deux loquets (20, 21) sont soutenus de manière pivotante par une plaque de base (6) fixée au véhicule (1) et configurée de manière à ce que les directions de verrouillage des deux loquets (20, 21) pour la gâche (8) soient opposées l'une à l'autre,
**caractérisé en ce que**
l'un des deux loquets (20, 21) comprend une partie de fixation (25A) du câble de commande de la transmission à droite et l'autre des deux loquets (20, 21) comprend une partie de fixation (25B) du câble de commande de la transmission à gauche.

2. Dispositif de verrouillage de capot (5) selon la revendication 1, comprenant en outre un élément de sollicitation (14) couplé à l'un des deux loquets (20, 21), l'élément de sollicitation (14) sollicitant l'un des deux loquets (20, 21) dans la direction de verrouillage.

3. Dispositif de verrouillage de capot (5) selon la revendication 2, dans lequel
chacun des deux loquets (20, 21) comprend une partie d'engagement (26, 27) configurée pour s'engager dans la gâche (8),
le dispositif de verrouillage de capot (5) comprend :
un ressort (22) fixé à la plaque de base (6), le ressort (22) étant configuré pour solliciter la gâche (8) vers les parties d'engagement (26, 27) des deux loquets (20, 21) lorsque le capot moteur (3) se trouve en position fermée et configuré pour libérer la gâche (8) grâce à la sollicitation lorsque les deux loquets (20, 21) sont pivotés dans les directions de verrouillage opposées l'une à l'autre ; et
un collecteur (9) supporté pivotant par la plaque de base (6), le collecteur (9) étant configuré pour pivoter dans une direction dans laquelle la gâche (8) est autorisée à se déplacer dans une section entre les deux loquets (20, 21) lorsque le capot moteur (3) se déplace vers la position fermée et configuré pour empêcher l'ouverture complète du capot moteur (3) par, lorsque la gâche (8) est libérée des deux loquets (20, 21), en s'engageant avec la gâche libérée (8), le collecteur (9) étant configuré pour être déplacé, par une opération manuelle, dans une direction dans laquelle le collecteur (9) se désengage de la gâche (8),
l'élément de sollicitation (14) est couplé au collecteur (9) et à l'un des loquets (20, 21),
et l'élément de sollicitation (14) sollicite le collecteur (9) de manière à ce que le collecteur (9) se déplace sur une trajectoire de mouvement de la gâche (8).

4. Dispositif de verrouillage de capot (5) selon la revendication 1, comprenant en outre un élément de sollicitation (14) couplé aux deux loquets (20, 21), l'élément de sollicitation (14) sollicitant les deux loquets (20, 21) dans les directions de verrouillage.

5. Dispositif de verrouillage de capot (5) selon l'une quelconque des revendications 1 à 3, dans lequel
les deux loquets (20, 21) sont disposés dans le sens de la largeur du véhicule (1),
la partie de fixation (25A) du câble de commande de la transmission à droite et la partie de fixation (25B) du câble de commande de la transmission à gauche sont disposées dans la direction de la largeur du véhicule (1), et
lorsqu'une partie de couplage (19) d'un câble de commande (16) est fixée à l'une des parties de fixation (25A) du câble de commande de la transmission à droite et la partie de fixation (25B) du câble de commande de la transmission à gauche, un fil (18) exposé à la partie de couplage (19) à partir d'un revêtement de câble (17) du câble de commande (16) est inséré librement dans l'autre partie de fixation du câble de commande (25A, 25B).

6. Dispositif de verrouillage de capot (5) selon l'une quelconque des revendications 1 à 3, dans lequel
les deux loquets (20, 21) sont disposés dans le sens de la largeur du véhicule (1), et
la partie de fixation (25A) du câble de commande de la transmission à droite et la partie de fixation (25B) du câble de commande de la transmission à gauche sont décalées l'une par rapport à l'autre dans au moins l'une des directions avant-arrière ou haut-bas du véhicule (1).
